# EUROPÄISCHE PATENTANMELDUNG

(11) **EP 0 780 401 A1**
(43) Veröffentlichungstag der Anmeldung: **25.06.1997**
(21) Anmeldenummer: 96120521.8
(22) Anmeldetag: 19.12.1996
(51) Int. Cl.: C08F 2/24, C08F 251/00

(54) **Verfahren zur Herstellung von Polymerisaten durch Emulsionspolymerisation**

(30) Priorität: 21.12.1995 DE 19548038
(71) Anmelder: BASF AKTIENGESELLSCHAFT, 67056 Ludwigshafen (DE)
(72) Erfinder: Leyrer, Reinhold, 67061 Ludwigshafen (DE); Mathauer, Klemens, 67061 Ludwigshafen (DE); Roser, Joachim, 68165 Mannheim (DE); Wildburg, Gerald, 67071 Ludwigshafen (DE); Haunschild, Alexander, 67346 Speyer (DE)
(74) Vertreter: Kinzebach, Werner, Dr.

(57) **Zusammenfassung**

Die vorliegende Erfindung betrifft ein Verfahren zur Herstellung von Polymerisaten aus hydrophoben Monomeren (a) durch Emulsionspolymerisation in Gegenwart von wenigstens einer Verbindung, die zum Aufbau einer supramolekularen Struktur fähig ist.

## Beschreibung

Die vorliegende Erfindung betrifft ein Verfahren zur Herstellung von Polymerisaten durch Emulsionspolymerisation von hydrophoben Monomeren und gegebenenfalls wasserlöslichen Monomeren.

Die radikalische Polymerisation von Monomeren in wäßrigen Lösungen ist von besonderem technischen Interesse. Voraussetzung für eine Lösungspolymerisation der Monomeren ist jedoch, daß sich die Monomeren in dem jeweils eingesetzten Lösemittel auch lösen. So ist es beispielsweise nicht möglich, unpolare Monomere nach Art einer Lösungspolymerisation in Wasser zu polymerisieren. Wasserlösliche Monomere, wie Acrylsaure oder Maleinsäure, werden industriell nach dem Verfahren der Losungspolymerisation in Wasser hergestellt. Die Copolymerisation von beispielsweise Acrylsäure mit wasserunlöslichen Monomeren ist in wäßrigem Medium nicht moglich.

Nach dem Verfahren der O/W-Emulsionspolymerisation werden ebenfalls wasserlösliche Monomere polymerisiert. Diese Methode versagt allerdings dann, wenn größere Mengen an wasserunlöslichen Comonomeren in das Copolymerisat eingebaut werden sollen, weil die Monomeren über die wäßrige Phase aus dem Monomertropfen in das polymerisierende Latexteilchen wandern müssen.

Auch bei der Massepolymerisation von wasserlöslichen und wasserunlöslichen Monomeren ist es notwendig, daß die unterschiedlichen Monomeren miteinander vertraglich sind, um einheitliche Polymerisate zu erhalten. Dies ist bei Comonomeren mit stark unterschiedlicher Polarität jedoch nicht gewährleistet. Auch bei anderen Polymerisationstechniken wie der Fallungspolymerisation, ist die Unverträglichkeit von wasserunlöslichen Monomeren mit den wäßrigen Medien oftmals ein entscheidender Nachteil.

Aus dem Stand der Technik ist bekannt, daß Cyclodextrine als organische Wirt-Moleküle dienen können und in der Lage sind, ein oder zwei Gastmoleküle unter Ausbildung supramolekularer Strukturen aufzunehmen, vgl. W. Saenger, Angew. Chem. Int. Ed. Engl. 1980, 19, 344, G. Wenz, Angew. Chem. Int. Ed. Engl. 1994, 33, 803-822 und F. Vögtle: Supramolekulare Chemie, B.G. Teubner, Stuttgart, 1989. So sind beispielsweise kristalline Komplexe aus Ethylen und Cyclodextrin bekannt.

Aus J. Macromol.Sci.-Chem., A13, 87-109 (1979) sind Einschlußverbindungen von Polymeren bekannt, die durch radikalische Polymerisation von Monomeren in einer β-Cyclodextrinmatrix in Dimethylformamidlösung hergestellt werden. Als Monomere werden Vinylidenchlorid, Methylacrylat, Styrol und Methacrylnitril genannt.

Aus der DE-A-4 009 621 sind schnellabbindende Klebstoffzusammensetzungen auf Basis von α-Cyanacrylaten bekannt, die in α-Cyanacrylaten zumindest partiell lösliche Derivate von Cyclodextrinen enthalten.

Die EP-A-460 896 beschreibt die Wirkung von Cyclodextrinen auf die Viskosität von hydrophoben Verdickern in wäßrigen Systemen.

Der vorliegenden Erfindung liegt die Aufgabe zugrunde, ein Verfahren zur Herstellung von Polymerisaten aus hydrophoben Monomeren, deren Löslichkeit in Wasser nicht ausreicht, damit das Monomere durch die Wasserphase diffundieren kann und gegebenenfalls wasserlöslichen Monomeren durch Polymerisation der Monomeren in einem wäßrigen Lösungsmittel zur Verfügung zu stellen.

Die Aufgabe wird erfindungsgemäß gelöst durch ein Verfahren zur Herstellung von Polymerisaten durch Emulsionspolymerisation von hydrophoben Monomeren (a) und gegebenenfalls wasserlöslichen Monomeren, das dadurch gekennzeichnet ist, daß man die Polymerisation in Gegenwart wenigstens einer Verbindung (b) durchführt, die zum Aufbau einer supramolekularen Struktur fähig ist.

Die hier in Betracht kommenden Verbindungen (b) sind geeignet, eine Assoziation mit dem Monomer (a) einzugehen derart, daß die Wasserdiffundierbarkeit des Monomers (a) verbessert wird. Zu Verbindungen (b) zählen Gast-Wirt-Komplexe, wie Clathrate, Cryptanden, Podanden, Spheranden und Speleanden (siehe F. Vogtle, Supramolekulare Chemie, B.G. Teubner, Stuttgart 1989) und insbesondere Verbindungen mit Cyclodextrinstruktur.

Zu Verbindungen mit Cyclodextrinstrukturen zählen neben den in den oben genannten Literaturstellen beschriebenen α-, β-, γ- und δ-Cyclodextrinen auch chemisch modifizierte Cyclodextrine. Die Cyclodextrine selber werden beispielsweise durch enzymatischen Abbau von Stärke gewonnen und bestehen z.B. aus 6 bis 9 D-Glucoseeinheiten, die über eine α-1,4-glycosidische Bindung miteinander verknüpft sind. α-Cyclodextrin besteht aus 6, β-Cyclodextrin aus 7 Glucosemolekülen. Unter chemisch modifizierten Cyclodextrinen sind Umsetzungsprodukte von Cyclodextrinen mit reaktiven Verbindungen zu verstehen, z.B. Umsetzungsprodukte von Cyclodextrinen mit Alkylenoxiden wie Ethylenoxid, Propylenoxid, Butylenoxid oder Styroloxid, Umsetzungsprodukte von Cylcodextrinen mit Alkylierungsmitteln, z.B. C₁- bis C₂₂-Alkylhalogeniden, z.B. Methylchlorid, Ethylchlorid, Butylchlorid, Ethylbromid, Butylbromid, Benzylchlorid, Laurylchlorid, Stearylchlorid oder Behenylchlorid und Dimethylsulfat. Eine weitere Modifizierung von Cyclodextrinen ist auch durch Umsetzung mit Chloressigsäure möglich. Derivate von Cyclodextrinen, die Cyclodextrinstrukturen enthalten, sind auch durch enzymatische Verknüpfung mit Maltose-Oligomeren erhältlich. Umsetzungsprodukte der oben angegebenen Art sind alkylierte (methylierte), hydroxyalkylierte und sulfonatoalkylierte Cyclodextrine, wie Dimethyl-β-cyclodextrin, Hydroxypropyl-β-cyclodextrin und Sulfonatopropylhydroxypropyl-β-cyclodextrin. Von den Verbindungen der Gruppe (a) verwendet man vorzugsweise α-Cyclodextrin, β-Cyclodextrin, γ-Cyclodextrin und/oder methylierte Cyclodextrine, z.B. 2,6-Dimethyl-β-cyclodextrin bzw. dessen Isomere und Homologe.

Die Verbindungen (b) können als Komplex mit dein hydrophoben Monomer (a), d.h. das Molverhältnis von (a):(b) liegt im Bereich von 1:1 bis 1:5, insbesondere 1:1 bis 1:3, zur Anwendung kommen. Vorzugsweise verwendet man die Verbindungen (b) jedoch in unterstöchiometrischen Mengen, d.h. das Molverhältnis von (a):(b) liegt im Bereich von 5000:1 bis 2:1, vorzugsweise 1000:1 bis 2:1, insbesondere 500:1 bis 10:1 und 100:1 bis 10:1 und besonders bevorzugt 80:1 bis 20:1.

Beispiele für Verbindungen (a) sind C₂- bis C₄₀ (insbesondere C₂ bis C₃₀)-Alkylester der Acrylsaure oder C₁- bis C₄₀ (insbesondere C₁ bis C₃₀)-Alkylester der Methacrylsäure, wie Methylmethacrylat, Ethylacrylat, Ethylmethacrylat, n-Propylacrylat, i-Propylmethacrylat, Isopropylacrylat, Isopropylmethacrylat, n-Butylacrylat, n-Butylmethacrylat, Isobutylacrylat, Isobutylmethacrylat, tert.-Butylacrylat, Pentylacrylat, Pentylmethacrylat, n-Hexylacrylat, n-Hexylmethacrylat, n-Heptylacrylat, n-Heptylmethacrylat, n-Octylacrylat, n-Octylmethacrylat, 2-Ethylhexylacrylat, 2-Ethylhexylmethacrylat, Decylacrylat, Decylmethacrylat, Laurylacrylat, Laurylmethacrylat, Palmitylacrylat, Palmitylmethacrylat, Stearylacrylat, Stearylmethacrylat, Hydrenol(meth)acrylat, Behenyl(meth)acrylat, Polyisobuten(meth)acrylate, Phenoxyethylacrylat, Phenoxyethylmethacrylat, Phenylacrylat und Phenylmethacrylat.

Weitere Monomere der Gruppe (a) sind α-Olefine mit 2 bis 30 C-Atomen sowie Polyisobutylene mit 3 bis 50, vorzugsweise 15 bis 35 Isobuten-Einheiten. Beispiele für α-Olefine sind Ethylen, Propylen, n-Buten, Isobuten, Penten-1, Cyclopenten, Hexen-1, Cyclohexen, Octen-1, Diisobutylen (2,4,4-Trimethyl-1-penten gegebenenfalls in Mischung mit 2,4,4-Trimethyl-2-penten), Decen-1, Dodecen-1, Octadecen-1, C₁₂/C₁₄-Olefine, C₂₀/C₂₄-Olefine, vinylaromatische Verbindungen, wie Styrol oder α-Methylstyrol, Vinylpyridine, wie 4-Vinylpyridin, Polypropylene mit endständiger Vinyl- bzw. Vinylidengruppe mit 3 bis 100 Propyleneinheiten, Polyisobuten mit 3 bis 35 Isobuteneinheiten und mit endständiger Vinyl- bzw. Vinylidengruppe, Oligohexen oder Oligooctadecen.

Als Monomer (a) sind auch Butadien und Isopren geeignet. Bei Verwendung dieser Monomere wird die Polymerisation unter Druck durchgeführt.

Eine weitere Klasse von Monomeren der Gruppe (a) sind N-Alkyl-substituierte Acrylamide und Methacrylamide, wie N-tert.-Butylacrylamid, N-Hexylmethacrylamid, N-Octylacrylamid, N-Nonylmethacrylamid, N-Dodecylmethacrylamid, N-Hexadecylmethacrylamid, N-Methacrylamidocapronsäure, N-Methacrylamidoundecansäure, N,N-Dibutylacrylamid, N-Hydroxyethylacrylamid und N-Hydroxyethylmethacrylamid.

Andere Monomere der Gruppe (a) sind Vinylalkylether mit 1 bis 40 Kohlenstoffatomen im Alkylrest, beispielsweise Methylvinylether, Ethylvinylether, n-Propylvinylether, Isopropylvinylether, n-Butylvinylether, Isobutylvinylether, 2-Ethylhexylvinylether, Decylvinylether, Dodecylvinylether, Stearylvinylether, 2-(Diethylamino)ethylvinylether, 2-(Di-n-butyl-amino)ethylvinylether, Methyldiglykolvinylether sowie die entsprechenden Allylether wie Allylmethylether, Allylethylether, Allyl-n-propylether, Allylisobutylether und Allyl-2-ethylhexylether. Außerdem eignen sich als Verbindungen der Gruppe (a) die wasserunlöslichen oder höchstens bis zu 20 g/l in Wasser löslichen Ester der Maleinsäure und Fumarsäure, die sich von einwertigen Alkoholen mit 1 bis 22 Kohlenstoffatomen ableiten, beispielsweise Maleinsäuremono-n-butylester, Maleinsäuredibutylester, Maleinsäuremonodecylester, Maleinsäuredidodecylester, Maleinsäuremonooctadecylester und Maleinsäuredioctadecylester. Außerdem eignen sich Vinylester von gesättigten C₃- bis C₄₀-Carbonsäuren wie Vinylpropionat, Vinylbutyrat, Vinylvalerat, Vinyl-2-ethylhexanoat, Vinyldecanoat, Vinylpalmitat, Vinylstearat und Vinyllaurat. Andere Monomere der Gruppe (a) sind Methacrylnitril, Vinylchlorid, Vinylidenchlorid, Isopren und Butadien.

Die oben genannten Monomere der Gruppe (a) können allein oder in Mischung von zwei oder mehreren zur Herstellung der Komplexe oder bei der Polymerisation eingesetzt werden. Bevorzugt als Monomere (a) in Betracht kommende Verbindungen sind C₂- bis C₃₀-Alkylester der Acrylsäure, C₁- bis C₃₀-Alkylester der Methacrylsäure, C₂- bis C₃₀-α-Olefine, C₁- bis C₂₀-Alkylvinylether, Vinylester von C₂- bis C₂₀-Carbonsauren, vinylaromatische Verbindungen, insbesondere Styrol, Butadien, Isopren oder deren Mischungen, insbesondere Mischungen aus wenigstens einem der erwähnten Acrylsäure- und/oder Methacrylsäureester und wenigstens einer vinylaromatischen Verbindung, vorzugsweise Styrol. Besonders bevorzugte Monomere (a) sind Methylmethacrylat, Ethylacrylat, Butylacrylat, t-Butylacrylat, t-Butylmethacrylat, 2-Ethylhexyacrylat, Laurylacrylat, Stearylacrylat, Hydrenolacrylat, Behenylacrylat, Polyisobuten(meth)acrylat, Vinylacetat, Vinylstearat, Isobuten, Hexen-1, Diisobuten, Dodecen-1, Octadecen-1, Polyisobutene mit 15 bis 35 Isobuten-Einheiten, Styrol, Methylvinylether, Ethylvinylether, Stearylvinylether oder Mischungen davon.

Die hydrophoben Monomeren (a) können alleine oder in Mischung untereinander radikalisch polymerisiert werden. Außerdem ist es moglich, die Monomere (a) mit wasserlöslichen Monomeren der Copolymerisation zu unterwerfen. Geeignete wasserlösliche Monomere, die im Folgenden als Monomere der Gruppe (c) bezeichnet werden, besitzen eine Wasserlöslichkeit von mehr als 20 g/l. Es handelt sich beispielsweise um monoethylenisch ungesättigte C₃- bis C₅-Carbonsäuren, deren Amide und Ester mit Aminoalkoholen der Formel 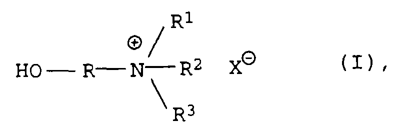 in der R = C₂- bis C₅-Alkylen, R¹, R², R³ = H, CH₃, C₂H₅, C₃H₇ und X^{⊖} ein Anion bedeutet. Geeignet sind außerdem Amide dieser Carbonsäuren, die sich von Aminen der Formel 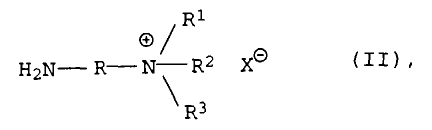 ableiten. Die Substituenten in Formel II und X^{⊖} haben die gleiche Bedeutung wie in Formel I.

Bei diesen Verbindungen (c) handelt es sich beispielsweise um Acrylsäure, Methacrylsäure, Crotonsäure, Itaconsäure, Maleinsäure, Fumarsäure, Acrylnitril, Acrylamid, Methacrylamid, Crotonsäureamid, Dimethylaminoethylacrylat, Diethylaminoethylacrylat, Dimethylaminoneopentylacrylat und Dimethylaminoethylmethacrylat, Dimethylaminopropylacrylat, Dimethylaminoneopentylacrylat und Dimethylaminoneopentylmethacrylat.

Die erwähnten Carbonsäuren konnen als freie Säure oder in partiell oder vollständig neutralisierter Form, z.B. als Alkalimetall- oder Ammoniumsalze, eingesetzt werden.

Die basischen Ester bzw. basischen Amide, die sich von den Verbindungen der Formel II ableiten, werden in Form der Salze mit starken Mineralsäuren, Sulfonsäuren oder Carbonsäuren oder in quaternisierter Form eingesetzt. Das Anion X⊖ für die Verbindungen der Formel I ist das korrespondierende Anion der Mineralsäuren bzw. der Carbonsäuren oder Methosulfat, Ethosulfat oder Halogenid aus einem Quaternierungsmittel.

Weitere wasserlösliche Monomere der Gruppe (c) sind N-Vinylpyrrolidon, N-Vinylformamid, Acrylamidopropansulfonsäure,Vinylphosphonsaure und/oder Alkali- bzw. Ammoniumsalze der Vinylsulfonsäure. Diese Säuren konnen ebenfalls entweder in nicht neutralisierter Form oder in partiell bzw. bis zu 100 % neutralisierter Form bei der Polymerisation eingesetzt werden. Als wasserlösliche Monomere der Gruppe (c) eignen sich auch Diallylammoniumverbindungen, wie Dimethyldiallylammoniumchlorid, Diethyldiallylammoniumchlorid oder Diallylpiperidiniumbromid, N-Vinylimidazoliumverbindungen, wie Salze oder Quaternisierungsprodukte von N-Vinylimidazol und 1-Vinyl-2-methylimidazol, und N-Vinylimidazoline, wie N-Vinylimidazolin, 1-Vinyl-2-methylimidazolin, 1-Vinyl-2-ethylimidazolin oder 1-Vinyl-2-n-propylimidazolin, die ebenfalls in quaternisierter Form oder als Salz bei der Polymerisation eingesetzt werden.

Bevorzugte Monomere der Gruppe (c) sind monoethylenisch ungesättigte C₃- bis C₅-Carbonsauren, Vinylsulfonsäure, Acrylamidomethylpropansulfonsäure, Vinylphosphonsäure, N-Vinylformamid, Dimethylaminoethyl(meth)acrylate, Alkali-, Ammonium oder quaternare Ammoniumsalze der genannten eine Säure- oder Aminogruppe enthaltenden Monomeren oder Mischungen der Monomeren untereinander. Von besonderer wirtschaftlicher Bedeutung ist der Einsatz von Acrylsäure oder Mischungen aus Acrylsäure und Maleinsäure oder deren Alkalisalze bei der Herstellung von hydrophob modifizierten wasserlöslichen Copolymerisaten, wobei als Monomere (a) besonders bevorzugt n-Butylacrylat, n-Stearylacrylat und/oder Styrol zur Anwendung kommen.

Um vernetzte Polymerisate herzustellen, die beispielsweise als Verdickungsmittel für wäßrige Systeme verwendet werden, polymerisiert man hydrophobe Monomere der Gruppe (a) und gegebenenfalls mindestens ein Monomer der Gruppe (c), in Gegenwart von Cyclodextrinstrukturen enthaltenden Verbindungen und mindestens einer Klasse von vernetzend wirkenden Monomeren. Man verwendet zu diesem Zweck übliche Vernetzer. Beispiele hierfur sind Divinylbenzol, Diallylphthalat, Allylvinylether und/oder Diallylfumarat etc. Die Herstellung der vernetzten Polymerisate kann gegebenenfalls zusätzlich in Gegenwart von Vernetzern erfolgen, die in Wasser loslich sind. Solche Monomere sind beispielsweise Acrylamidoglykolsäure, N-Methylolacrylamid, N-Methylolmethacrylamid, 1,4-Bisaminooxybutan, Adipinsäuredihydrazid, z.B. in Gegenwart eines Ketons, N,N'-Methylenbisacrylamid, Polyethylenglykoldiacrylate und Polyethylenglykoldimethacrylate, die sich jeweils von Polyethylenglykolen eines Molekulargewichts von 126 bis 8500 ableiten, Trimethylolpropantriacrylat, Trimethylolpropantrimethacrylat, Ethylenglykoldiacrylat, Propylenglykoldiacrylat, Butandioldiacrylat, Hexandioldiacrylat, Hexandioldimethacrylat, Diacrylate und Dimethacrylate von Blockcopolymerisaten aus Ethylenoxid und Propylenoxid, zweifach bzw. dreifach mit Acrylsaure oder Methacrylsäure veresterte mehrwertige Alkohole wie Glycerin oder Pentaerythrit, Triallylamin, Tetraallylethylendiamin, Trimethylolpropandiallylether, Pentaerythrittriallylether und/oder N,N'-Divinylethylenharnstoff. Die Vernetzer werden vorzugsweise in Mengen von 0,01 bis 40 Gew.-%, insbesondere 0,5 bis 5 Gew.-%, bezogen auf die bei der Copolymerisation insgesamt eingesetzten Monomeren, verwendet. Die Vernetzer können jedoch auch alleine zu Homopolymerisaten polymerisiert werden.

Die Polymerisation der wasserunlöslichen Monomeren und gegebenenfalls der wasserlöslichen Monomeren erfolgt nach Art einer Emulsionspolymerisation in einem wäßrigen Medium, vorzugsweise in Wasser. Unter wäßrigem Medium sind hier auch Mischungen aus Wasser und damit mischbaren organischen Flüssigkeiten zu verstehen. Mit Wasser mischbare organische Flussigkeiten sind beispielsweise Polyole, insbesondere Glykole wie Ethylenglykol, Propylenglykol, 1,3-Butylenglykol, Diethylenglykol, Triethylenglykol, Tetraethylenglykol und Glycerin, Blockcopolymerisate aus Ethylenoxid und Propylenoxid, alkoxylierte C₁- bis C₂₀-Alkohole, Essigsäureester von Glykolen und Polyglykolen, Alkohole wie Methanol, Ethanol, Isopropanol und Butanol, Aceton, Tetrahydrofuran, Dimethylformamid, N-Methylpyrrolidon oder auch Mischungen der genannten Lösemittel. Falls die Polymerisation in Mischungen aus Wasser und mit Wasser mischbaren Losemitteln erfolgt, so beträgt der Anteil an mit Wasser mischbaren Lösemitteln in der Mischung bis zu 75 Gew.-%.

Die Emulsionspolymerisation der Monomeren erfolgt üblicherweise unter Sauerstoffausschluß bei Temperaturen von beispielsweise 20 bis 200°C, vorzugsweise 35 bis 140°C. Die Polymerisation kann diskontinuierlich oder kontinuierlich durchgeführt werden. Vorzugsweise dosiert man zumindest einen Teil der Monomere, Initiatoren und gegebenenfalls Regler während der Polymerisation gleichmäßig in das Reaktionsgefäß zu einer Lösung der Cyclodextrinstrukturen enthaltenden Verbindungen in dem waßrigen Losungsmittel. Die Monomere und der Polymerisationsinitiator konnen jedoch bei kleineren Ansätze auch im Reaktor vorgelegt und polymerisiert werden, wobei man gegebenenfalls durch Kühlen für eine ausreichend schnelle Abfuhr der Polymerisationswärme sorgen muß.

Vorzugsweise wird die Polymerisation radikalisch durchgeführt. In diesem Fall kommen als Polymerisationsinitiatoren die bei radikalischen Polymerisationen üblicherweise verwendeten Verbindungen in Betracht, die unter den Polymerisationsbedingungen Radikale liefern, z.B. Peroxide, Hydroperoxide, Peroxodisulfate, Percarbonate, Peroxiester, Wasserstoffperoxid und Azoverbindungen. Beispiele für Initiatoren sind Wasserstoffperoxid, Dibenzoylperoxid, Dicyclohexylperoxiddicarbonat, Dilaurylperoxid, Methylethylketonperoxid, Acetylacetonperoxid, tert.-Butylhydroperoxid, Cumolhydroperoxid, tert.-Butylperneodecanoat, tert.-Amylperpivalat, tert.-Butylperpivalat, tert.-Butylperneohexanoat, tert.-Butylper-2-ethylhexanoat, tert.-Butylperbenzoat, Lithium-, Natrium-, Kalium- und Ammoniumperoxidisulfat, Azoisobutyronitril, 2,2'-Azobis(2-amidinopropan)dihydrochlorid, 2-(Carbamoylazo)isobutyronitril und 4,4'-Azobis(4-cyanovaleriansäure). Die Initiatoren werden üblicherweise in Mengen bis zu 15, vorzugsweise 0,02 bis 10 Gew.-%, bezogen auf die zu polymerisierenden Monomeren eingesetzt.

Die Initiatoren können allein oder in Mischung untereinander verwendet werden. Auch die Anwendung der bekannten Redoxkatalysatoren, bei denen die reduzierende Komponente im molaren Unterschuß angewendet wird, sind geeignet. Bekannte Redoxkatalysatoren sind beispielsweise Salze von Übergangsmetallen wie Eisen-II-sulfat, Kobalt-II-chlorid, Nickel-II-sulfat, Kupfer-I-chlorid, Mangan-II-acetat, Vanadin-III-acetat. Als Redoxkatalysatoren kommen weiterhin reduzierend wirkende Schwefelverbindungen, wie Ascorbinsaure, Sulfite, Bisulfite, Thiosulfate, Dithionite und Tetrathionate von Alkalimetallen und Ammoniumverbindungen oder reduzierend wirkende Phosphorverbindungen, in denen Phosphor eine Oxidationszahl von 1 bis 4 hat, wie beispielsweise Natriumhypophosphit, phosphorige Säure und Phosphite in Betracht.

Um das Molekulargewicht der Polymerisate zu steuern, kann man die Polymerisation gegebenenfalls in Gegenwart von Reglern durchführen. Als Regler eignen sich beispielsweise Aldehyde wie Formaldehyd, Acetaldehyd, Propionaldehyd, n-Butyraldehyd und Isobutyraldehyd, Ameisensäure, Ammoniumformiat, Hydroxylammoniumsulfat und Hydroxylammoniumphosphat. Weiterhin können Regler eingesetzt werden, die Schwefel in organisch gebundener Form enthalten, wie SH-Gruppen aufweisende organische Verbindungen wie Thioäpfelsaure, Thioglykolessigsäure, Mercaptoessigsäure, Mercaptopropionsäure, Mercaptoethanol, Mercaptopropanol, Mercaptobutanole, Mercaptohexanol, Dodecylmercaptan und tert.-Dodecylmercaptan. Als Regler können weiterhin Salze des Hydrazins wie Hydraziniumsulfat eingesetzt werden. Die Mengen an Regler, bezogen auf die zu polymerisierenden Monomeren, betragen 0 bis 20, vorzugsweise 0,5 bis 15 Gew.-%.

Die Polymerisation kann in Anwesenheit eines für diese Zwecke üblichen Emulgators und/oder Schutzkolloids durchgeführt werden. Geeignete Schutzkolloide sind beispielsweise Polyvinylalkohole, Cellulosederivate oder Polyvinylpyrrolidone. Die Emulgatoren können anionischer, kationischer oder nichtionischer Natur sein. Geeignete Emulgatoren sind z.B. ethoxylierte Mono-, Di- und Tri-Alkylphenole (EO-Grad: 3 bis 50, Alkylrest: C₄ bis C₉), ethoxylierte Fettalkohole (EO-Grad: 3 bis 50, Alkylrest C₈ bis C₃₆), sowie Alkali- und Ammoniumsalze von Alkylsulfaten (Alkylrest: C₈ bis C₁₂), von Schwefelsaurehalbestern ethoxylierter Alkanole (EO-Grad: 4 bis 30, Alkylrest C₁₂ bis C₁₈) und ethoylierter Alkylphenole (EO-Grad: 3 bis 50, Alkylrest: C₄ bis C₉), von Alkylsulfonsäuren (Alkylrest: C₁₂ bis C₁₈), von Ligninsulfonsäure und von Alkylarylsulfonsauren (Alkylrest: C₉ bis C₁₈). Als besonders geeignete Emulgatoren haben sich Verbindungen der allgemeinen Formel I 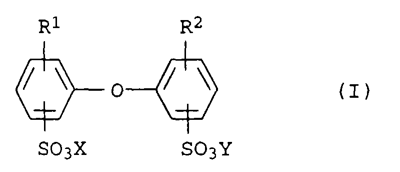 worin R¹ und R² Wasserstoff oder C₄- bis C₂₄-Alkyl bedeuten und nicht gleichzeitig Wasserstoff sind, und X und Y Alkalimetallionen und/oder Ammoniumionen sein können, erwiesen. In der Formel I bedeuten R¹ und R² bevorzugt lineare oder verzweigte Alkylreste mit 6 bis 18 C-Atomen, wobei R¹ und R² nicht beide gleichzeitig Wasserstoff sind. X und Y sind bevorzugt Natrium, Kalium oder Ammoniumionen.

Es hat sich gezeigt, daß die Polymerisation auch ohne Emulgator oder Schutzkolloid durchgeführt werden kann, insbesondere bei Verwendung amphiphiler Cyclodextrine, wie Dimethylcyclodextrine.

Die Polymerisate liegen gegebenenfalls in Form von Einschlußverbindungen vor bzw. konnen daraus gewonnen werden. Die Bildung von Einschlußverbindungen aus den Polymeren und den Verbindungen der Komponente (a) ist reversibel. Nach der Polymerisation liegen die Polymerisate meistens separat von den Verbindungen (a) im Latexteilchen vor. Sofern die Polymerisate nach der Herstellung in Form von Einschlußverbindungen vorliegen, konnen sie beispielsweise durch Zusatz von z.B. Netzmitteln wie ethoxylierten langkettigen Alkoholen zur Reaktionsmischung aus den Einschlußverbindungen freigesetzt und isoliert werden.

Gewünschtenfalls kann die erhaltene Dispersion mit einer wassermischbaren organischen Flüssigkeit verdünnt werden. Die Menge an organischer Flüssigkeit in der Dispersion kann bis zu 75 % Gew.-% betragen, bezogen auf das Gesamtgewicht der flüssigen Phase. Geeignete organische Flüssigkeiten wurden bereits oben erwähnt, wobei die genannten Polyole bevorzugt sind, insbesondere, wenn die Dispersion zur Olbehandlung verwendet wird.

Die nach dem erfindungsgemäßen Verfahren hydrophob modifizierten Polymerisate können beispielsweise als Verdickungsmittel, z.B. in kosmetischen Cremes oder Lotionen, als Komponente in Lackformulierungen, als Leimungsmittel für die Papierherstellung, als Beschichtungsmasse, als Klebrohstoff, als Waschmittelzusatz oder als Dispergiermittel für Pigmente eingesetzt werden. Weiterhin können solche Polymere als Gerb-, Nachgerb-, Fettungs- oder Hydrophobiermittel für die Lederherstellung verwendet werden. Hydrophob modifizierte Polymerisate dienen außerdem als polymere Emulgatoren, die eine feine Verteilung eines unpolaren Stoffes in einer polaren Phase stabilisieren. Vernetzte Polyacrylsäuren, die beispielsweise durch Copolymerisieren von Acrylsäure un hydrophoben Monomeren in Gegenwart eines Cyclodextrins und einem wasserunlöslichen Vernetzter wie Divinylbenzol erhältlich sind, werden als Superabsorber oder Verdickungsmittel für wäßrige Systeme verwendet. Außerdem kann die erfindungsgemäße Dispersion zur Ölbehandlung verwendet werden, insbesondere zur Erniedrigung des Stockpunktes, z.B. von Rohöl, Heizöl oder Dieselöl.

Die nachfolgenden Beispiele erläutern die Erfindung ohne sie zu begrenzen.

Allgemeine Arbeitsvorschrift für die drucklose Copolymerisation der in den nachfolgenden Tabellen genannten Monomere:

Das Cyclodextrinderivat wurde zusammen mit 360 g Wasser in einem Kolben vorgelegt. Man spülte mit Stickstoff und erwärmte auf 80°C. Zu dieser Mischung gab man 0,6 g Natriumpersulfat in Form einer 2 %igen wässrigen Lösung. 600 g des gewünschten Monomerengemisches wurden zubereitet und mit 3 g Emulgator (Dodecylbenzolsulfonsaure-Natriumsalz) in Form einer 15 %igen wässrigen Lösung versetzt. 3 g dieser Mischung wurden in den Kolben gegeben. Man polymerisierte 15 min bei 80°C. Anschließend dosierte man die restliche Monomermenge und 2,4 g Natriumpersulfat über einen Zeitraum von 4 h zu und gab danach 1,9 g Rongalit® (Hydroxymethansulfinsäure) und 2,4 g t-Butylhydroperoxid zum Reaktionsansatz. Man rührte noch weitere 90 min, kühlte dann den Reaktionsansatz auf Raumtemperatur und filtrierte über einen 125 µm-Filter, um gegebenenfalls gebildetes Koagulat zu entfernen. Der Feststoffgehalt der erhaltenen Dispersion war 43,4%. Die Monomerzusammensetzung ist in den nachfolgenden Tabellen angegeben.

Aus der Polymerdispersion wurde ein Film durch Gießen auf Aluminiumfolie und Trocknen bei 110°C hergestellt und dieser mittels DSC untersucht. Die gemessenen Glastemperaturen und Schmelztemperaturen sind in den nachfolgenden Tabellen angegeben, in denen folgende Abkürzungen verwendet werden:

| | | | |
|---|---|---|---|
| nBuA | n-Butylacrylat | T_{G} | Glastemperatur |
| St-A | Stearylacrylat | Tₛ | Schmelztemperatur |
| S | Styrol | Koag. | Koagulat |
| A | Acrylsaure | V | Vergleichsversuch |
| CD1 | β-Cyclodextrin | | |
| CD2 | β-Cyclodextrin mit 1,8 Methyleinheiten pro Glucosering | | |

Die Menge der einzelnen Monomeren ist auf die Gesamtmonomerenmenge bezogen. Die Menge an Cyclodextrinen ist ebenfalls auf die Gesamtmonomerenmenge bezogen.

### Beispiele 1 bis 3 und Vergleichsbeispiele 1 bis 3 (V1 bis V3):

**Tabelle 1**

| Beispiel | Monomere (Gew.-%) | | | | Cyclodextrine (Gew.-%) | Polymerisatfilm | | |
|---|---|---|---|---|---|---|---|---|
| | n-BA | S | AS | SA | CD1 | T_{G} [°C] | T_{S} [°C] | Koag. (%) |
| V1 | 49.5 | 49.5 | 1.0 | 0 | - | 22 | | 0.2 |
| V2 | 44.5 | 44.5 | 1.0 | 10.0 | - | 22 | 48 | 0.5 |
| V3 | 39.5 | 39.5 | 1.0 | 20.0 | - | 22 | 48 | >15 |
| 1 | 44.5 | 44.5 | 1.0 | 10.0 | 5.0 | 14 | - | - |
| 2 | 39.5 | 39.5 | 1.0 | 20.0 | 5.0 | 6 | - | - |
| 3 | 34.5 | 34.5 | 1.0 | 30.0 | 5.0 | -9 | - | - |

Aus den Vergleichsbeispielen ist ersichtlich, daß auch bei Verwendung von Stearylacrylat zum einen die Glastemperatur nicht abfallt und zum anderen in der DSC (Differential Scanning Calorimetrie) ein Schmelzpeak bei 48°C zu beobachten ist. Außerdem steigt der Koagulatanteil mit zunehmendem Stearylacrylatanteil im Monomerengemisch. Daraus ist zu schließen, daß kein Stearylacrylat in das Copolymer eingebaut wurde. Vielmehr fällt ein Teil des gebildeten Polystearylacrylates als Koagulat aus. Nach mehreren Tagen erhöht sich dieser Koagulatanteil zunehmend.

Im Gegensatz dazu ist bei den Beispielen 1 bis 3 zu beobachten, daß die Glastemperatur des Polymerisates mit steigendem Stearylacrylatanteil abfällt. Es war weder ein Schmelzpeak noch die Bildung eines Koagulates zu beobachten. Das bedeutet, daß die gesamte zur Anwendung kommende Menge an Stearylacrylat in das Copolymer eingebaut wurde.

### Beistiele 4 bis 6 und Vergleichsbeispiele 4 und 5

**Tabelle 2**

| Beispiel | Monomere (Gew.-%) | | | | Cyclodextrine (Gew.-%) | Polymerisatfilm | | |
|---|---|---|---|---|---|---|---|---|
| | n-BA | S | AS | SA | CD1 | T_{G} [°C] | T_{S} [°C] | Koag. (%) |
| V4 | 99.0 | 0 | 1.0 | 0 | - | -44 | - | - |
| V5 | 89.0 | 0 | 1.0 | 10.0 | - | -44 | 44 | 2% |
| 4 | 89.0 | 0 | 1.0 | 10.0 | 5.0 | -45 | 45 | - |
| 5 | 79.0 | 0 | 1.0 | 20.0 | 5.0 | -46 | 45 | - |
| 6 | 69.0 | 0 | 1.0 | 30.0 | 5.0 | -46 | 45 | - |

Die Vergleichsbeispiele 4 und 5 zeigen, daß bei Verwendung von Stearylacrylat als Comonomer ein Schmelzpeak bei 44°C auftritt. Das heißt, daß nahezu reines Polystearylacrylat zusätzlich entstanden ist, das nicht in stabiler disperser Form vorliegt, sondern teilweise sofort (2%) und nach mehrstündigem Lagern nahezu quantitativ ausfällt.

Die Beispiele 4 bis 6 wiederum zeigen, daß zwar kein Copolymer aus n-Butylacrylat und Stearylacrylat entstanden ist, die gesamte Menge an Stearylacrylat und n-Butylacrylat aber homopolymerisiert hat und die beiden Polymerisate quantitativ in fein verteilter disperser Form vorliegen. Dies ist eine für die Praxis besonders attraktive Methode, Mischungen aus zwei Homopolymeren mit sich ergänzenden Eigenschaften in Dispersionen herzustellen, ohne die jeweiligen Dispersionen getrennt synthetisieren und anschließend mischen zu müssen.

### Beispiele 7 bis 11 und Vergleichsbeispiel 6

**Tabelle 3**

| Beispiel | Monomere (Gew.-%) | | | | Cyclodextrine (Gew.-%) | Polymerisatfilm | | |
|---|---|---|---|---|---|---|---|---|
| | n-BA | S | AS | SA | CD2 | T_{G} [°C] | T_{S} [°C] | Koag. (%) |
| V6 | 99.0 | 0 | 1.0 | 0 | - | 107 | - | |
| 7 | 99.0 | 0 | 1.0 | 0 | 5.0 | 107 | - | |
| 8 | 89.0 | 0 | 1.0 | 10.0 | 5.0 | 78 | - | |
| 9 | 79.0 | 0 | 1.0 | 20.0 | 5.0 | 57 | - | |
| 10 | 69.0 | 0 | 1.0 | 30.0 | 6.0 | 36 | - | |
| 11 | 59.0 | 0 | 1.0 | 40.0 | 8.0 | 19 | - | |

Die Beispiele 7 bis 11 zeigen, daß durch Einbau zunehmender Mengen an Stearylacrylat die Glastemperatur kontinuierlich absinkt, d.h. das gesamte Stearylacrylat wird in das Polymerisat eingebaut.

### Beispiel 12

### Copolymer mit Behenylacrylat

30,0 g Dimethyl-β-cyclodextrin mit 1,8 Methyleinheiten pro Glukosering wurde zusammen mit 400 g Wasser in einem Kolben vorgelegt. Man spülte mit Stickstoff und erwärmte auf 80°C. Zu dieser Mischung gab man 0,6 g Natriumpersulfat in Form einer 2 %igen wassrigen Lösung. Separat wurde ein Gemisch aus 474,0 g Styrol, 120,0 g Behenylacrylat und 6,0 g Acrylsäure in 160 g Wasser unter Verwendung von 20,0 g Emulgatorlösung (15 %ige wäßrige Dodecylbenzolsulfonsäure-Natriumsalz) emulgiert. Man gab 3,9 g der Emulsion in die Vorlage und ließ 15 min bei 18°C anpolymerisieren. Anschliessend ließ man den Rest der Emulsion wahrend 225 min und parallel dazu 2,4 g Natriumpersulfat in Form der 2 %igen wässrigen Lösung wahrend 240 min zulaufen. Man ließ 10 min bei 80°C nachpolymerisieren und gab danach 1,9 g Hydroxymethansulfinsäure und 2,4 g t-Butylhydroperoxid zu. Man rührte noch weitere 90 min, kühlte dann den Reaktionsansatz auf Raumtemperatur und filtrierte über einen 125 µm-Filter. Der Feststoffgehalt der erhaltenen Dispersion war 45,7 %, Koagulatbildung war nicht zu beobachten. Die Glastemperatur (bestimmt, wie oben angegeben) war 54°C.

### Beispiel 13

### Copolymer mit α-Dodecen

Nach dem in Beispiel 12 beschriebenen Verfahren wurde ein Copolymerisat aus 534,0 g Styrol, 60,0 g α-Dodecen und 6,0 g Acrylsäure hergestellt. Die Koagulatmenge war < 1 g und die Glastemperatur des erhaltenen Copolymerisats war 63°C.

### Beispiel 14 und Vergleichsbeispiel 7

### Allgemeine Arbeitsvorschrift für die Druck-Copolymerisation unter Verwendung von Butadien:

4000 g Wasser und 150 g Cyclodextrin wurden vorgelegt und auf 90°C erhitzt. Man gab 3 g Natriumpersulfat und gegebenenfalls etwas Saat zu.

3000 g des in der nachfolgenden Tabelle 4 angegebenen Monomerengemisches wurden mit 30 g Dowfax® (sulfoniertes Alkyldiphenyloxid, vertrieben von der Dow Chemical Company), und 30 g Natriumlaurylsulfat in 4000 g Wasser emulgiert. Als Regler wurden 30 g p-Dodecylmercaptan zugesetzt. Man ließ dieses Gemisch zusammen mit 2700 g einer 10 %igen Natriumpersulfatlösung innerhalb von 4,5 h so in die Vorlage laufen, daß der Druck 6 bar nicht überstieg. Nach 3-stündiger Nachpolymerisationszeit wurde mit 4 g t-Butylhydroperoxid und 3 g Hydroxymethansulfinsäure 4 h chemisch nachbehandelt. Der Feststoffgehalt der erhaltenen Dispersion war 17,7 %

Die Herstellung und Charakterisierung der Filme erfolgte, wie oben angegeben. Die erhaltenen Ergebnisse sind in der nachfolgenden Tabelle 4 zusammengestellt.

| Beispie l | Monomere (Gew.-%) | | | | Cyclodextrin (Gew.-%) | Polymerisatfilm | |
|---|---|---|---|---|---|---|---|
| | Bu | S | AS | SA | CD1 | T_{g} | T_{S} |
| V7 | 30,0 | 68,5 | 1,5 | 0,0 | 0,0 | 33,1 | - |
| 14 | 24,0 | 54,8 | 1,2 | 20,0 | 5.0 | 11,2 | - |

Die DSC-Analyse zeigt eine deutliche Verringerung der Glastemperatur beim Beispiel 14 gegenüber dem Vergleichsbeispiel 7. Ein Schmelzpeak ist nicht zu beobachten. Das bedeutet, daß das Stearylacrylat copolymerisiert wurde.

## Patentansprüche

1. Verfahren zur Herstellung von Polymerisaten durch Emulsionspolymerisation von hydrophoben Monomeren (a) und gegebenenfalls wasserlöslichen Monomeren, dadurch gekennzeichnet, daß man die Polymerisation in Gegenwart wenigstens einer Verbindung (b) durchführt, die zum Aufbau einer supramolekularen Struktur fähig ist.

2. Verfahren nach Anspruch 1, dadurch gekennzeichnet, daß man als Verbindung (b) eine Verbindung mit Cyclodextrinstruktur verwendet.

3. Verfahren nach Anspruch 1 oder 2, dadurch gekennzeichnet, daß das Molverhältnis von (a):(b) im Bereich von 5000:1 bis 1:5 liegt.

4. Verfahren nach Anspruch 2 oder 3, dadurch gekennzeichnet, daß man als Verbindung mit Cyclodextrinstruktur α-, β-, γ- oder δ-Cyclodextrine und/oder chemisch modifizierte Cyclodextrine, insbesondere methyliertes Cyclodextrin, verwendet.

5. Verfahren nach einem der vorhergehenden Ansprüche, dadurch gekennzeichnet, daß das wäßrige Medium neben Wasser auch eine mit Wasser mischbare organische Flüssigkeit enthält.

6. Verfahren nach einem der vorhergehenden Ansprüche, dadurch gekennzeichnet, daß man als Monomere (a) C₂- bis C₃₀-Alkylester der Acrylsaure, C₁- bis C₃₀-Alkylester der Methacrylsäure, C₂- bis C₃₀-α-Olefine, C₁- bis C₂₀-Alkylvinylether, Vinylester von C₂- bis C₂₀-Alkansäuren, N-C₁-C₃₀-Alkylsubstituierte Acryl- und Methacrylamide, Styrol, Butadien, Isopren oder Mischungen davon einsetzt.

7. Verfahren nach Anspruch 6, dadurch gekennzeichnet, daß man als Monomere (a) wenigstens einen C₂- bis C₃₀-Alkylester der Acrylsäure und/oder wenigstens einen C₁- bis C₃₀-Alkylester der Methacrylsäure zusammen mit Styrol einsetzt.

8. Verfahren nach Anspruch 6 oder 7, dadurch gekennzeichnet, daß man als Monomere (a) Methylmethacrylat, Ethylacrylat, Butylacrylat, t-Butylacrylat, t-Butylmethacrylat, 2-Ethylhexylacrylat, Laurylacrylat, Stearylacrylat, Hydrenolacrylat, Behenylacrylat, Polyisobuten(meth)acrylat, Vinylacetat, Vinylstearat, Isobuten, Hexen-1, Diisobuten, Dodecen-1, Octadecen-1, Polyisobutene mit 3 bis 35 Isobuten-Einheiten, Styrol, Methylvinylether, Ethylvinylether, Stearylvinylether oder Mischungen davon.

9. Verfahren nach einem der vorhergehenden Ansprüche, dadurch gekennzeichnet, daß die Monomere (a) auch vernetzend wirkende Monomere umfassen.

10. Verfahren nach einem der vorhergehenden Ansprüche, dadurch gekennzeichnet, daß man als wasserlösliche Monomere monoethylenisch ungesättigte C₃- bis C₅-Carbonsäuren, Acrylnitril, Vinylsulfonsäure, Acrylamidomethylpropansulfonsäure, Vinylphosphonsäure, N-Vinylformamid, Dialkylaminoethyl(meth)acrylate, Alkali-, Ammonium- oder quaternäre Ammoniumsalze der genannten eine Säure- oder Aminogruppe enthaltenden Monomere oder Mischungen der Monomere untereinander einsetzt.

11. Wäßrige Polymerdispersion, erhältlich nach einem Verfahren nach einem der vorhergehenden Ansprüche.

12. Wäßrige Polymerdispersion nach Anspruch 11, die eine mit Wasser mischbare organische Flüssigkeit umfaßt, insbesondere ein Polyol.
